# EUROPEAN PATENT SPECIFICATION

(11) **EP 4 197 879 B1**
(45) Date of publication and mention of the grant of the patent: **07.01.2026**
(21) Application number: 21945605.0
(22) Date of filing: 08.07.2021
(51) Int. Cl.: B61L 15/00, B61H 13/00, B61L 3/12, B60T 17/22, B60T 13/66

(54) **POINT-TYPE TRAIN CONTROL ON-BOARD SYSTEM AND TRAIN CONTROL METHOD**
PUNKTARTIGES ZUGSTEUERUNGS-ONBOARD-SYSTEM UND ZUGSTEUERUNGSVERFAHREN
SYSTÈME EMBARQUÉ DE COMMANDE DE TRAIN DE TYPE PONCTUEL ET PROCÉDÉ DE COMMANDE DE TRAIN

(30) Priority: 17.06.2021 CN 202110668889
(43) Date of publication of application: 21.06.2023
(73) Proprietor: CRSC Research & Design Institute Group Co., Ltd., Beijing 100070 (CN)
(72) Inventor: XU, Yanwen, Beijing 100070 (CN); YE, Feng, Beijing 100070 (CN); ZHANG, Pengfei, Beijing 100070 (CN); CHEN, Daiying, Beijing 100070 (CN); WANG, Mingxi, Beijing 100070 (CN); REN, Wei, Beijing 100070 (CN); LI, Aitong, Beijing 100070 (CN); SUN, Guoying, Beijing 100070 (CN); LI, Zhiyu, Beijing 100070 (CN); ZOU, Weidong, Beijing 100070 (CN)
(74) Representative: Meissner Bolte Partnerschaft mbB
(86) International application number: PCT/CN2021/105120
(87) International publication number: WO 2022/262022

(56) References cited:
- EP-A2- 2 399 802
- WO-A1-2015/090932
- CN-A- 102 923 165
- CN-A- 105 799 735
- CN-A- 107 888 470
- CN-A- 110 853 446
- CN-U- 204 978 661
- CN-U- 208 673 067
- DE-A1- 10 302 858
- US-A1- 2010 299 007
- DOLCH K ET AL: "INDUSI 60-R", SIGNAL UND DRAHT: SIGNALLING & DATACOMMUNICATION, EURAILPRESS, DE, vol. 81, no. 10, 1 October 1989 (1989-10-01), pages 215 - 223, XP000094438, ISSN: 0037-4997

## Description

### TECHNICAL FIELD

The present invention relates to the field of railway signal technologies, and in particular to a point-type onboard system for controlling a train and a train control method.

### BACKGROUND ART

In the late 1930s, the German Railways began to adopt the three-frequency-induction point-type system for automatic train parking (which is expressed in German as Induktive Zugsicherung, Indusi for short). This system has a simple point-type speed check function. In the 1990s, the Indusi onboard equipment was computerized and renamed the Punktförmige Zugbeeinflussung (PZB for short in German) system. As onboard equipment of an intermittent train control system, the PZB point-type train control system and the ground trackside response antenna form a point-type train control system.

The PZB technical specification published by Germany stipulates as follows:
(1) The onboard antenna is mounted on the right side of the driving direction of a locomotive, and the PZB host continuously sends signals through the onboard antenna. When the locomotive passes the PZB trackside response antenna mounted on the side of the rail, the current of signal sent by the PZB onboard antenna (LGP for short in German) is reduced. Through the change state of signal current of a corresponding frequency signal in the transmit antenna, the PZB host determines the antenna frequency sensed when a train runs across the ground, each ground frequency information representing a different signal light and location information.
(2) The PZB host acquires the running speed of a train using a speed acquiring sensor. The PZB host acquires information such as the information of button operated by a driver in the cab, the switch value information given by the locomotive system, and the vehicle model inputted by the driver from the DMI.
(3) The PZB host processor comprehensively processes the information acquired, configured, and obtained to output driving advice, alarm, emergency braking, and other information.

The PZB host conveys train supervision speed, speed limit, warning information, and the like by means of DMI display and speaker sound, so as to prompt the driver to drive the train safely and efficiently, and can output emergency braking information and braking control signals according to the comprehensive situation of operation management.

In the existing point-type train control system used in the European railway market, the signals provided by the host computer for the onboard antenna are switch signals sharing a negative pole, and these signals are not electrically independent. In addition, the host computer in the existing point-type train control system has a large volume, which is not convenient for integrated mounting of new vehicles.

DOLCH K ET AL: "INDUSI 60-R", SIGNAL UND DRAHT: SIGNALLING & DATACOMMUNCATION, EURAILPRESS, DE, vol. 81, no. 10, 1 October 1989 (1989-10-01), page 215-223, ISSN: 0037-4997, relates to the new LZB on-board unit 80 at Deutsche Bundesbahn. This unit contains further developed Indusi functions. As the associated gain in safety is also to be utilised for vehicles without LZB and the new functions can be implemented advantageously with a computer, the development of a new computer-based Indusi on-board unit has been initiated.

EP 2 399 802 A2 relates to a vehicle device for a system for point-type inductive train control with at least one generator for generating an alternating current and for supplying at least one resonant circuit of at least one vehicle magnet with the generated alternating current and at least one monitoring device for detecting a reaction to the at least one resonant circuit of the vehicle magnet caused by at least one track magnet.

DE 103 02 858 A1 relates to a system for inductive train protection with a track magnet and a vehicle magnet which can be excited by means of a generator circuit, in particular with the frequencies 500 Hz, 1000 Hz and 2000 Hz, wherein the track magnet (4) can be excited by the vehicle magnet while driving over the track magnet and wherein an evaluation circuit is provided for detecting the resulting reactions on the vehicle magnet.

### SUMMARY

To resolve the foregoing problem, the invention has been set out in the appended claims.

The point-type onboard system for controlling a train in the present invention includes an onboard antenna, a recording module, a logic decoding module, a power amplification module, an interface module, and a communication module,
where
the communication module connects to the logic decoding module, the recording module, and the interface module;
the interface module connects to the logic decoding module and the recording module;
the recording module connects to the power amplification module and the logic decoding module; and
the power amplification module connects to the onboard antenna.

Further,
the logic decoding module is provided with two CPUs having independent power supplies; and
the communication module is provided with two CPUs having independent power supplies; and
the interface module is provided with a CPU.

Further,
the interface module is provided with two safety AND gate circuits and two onboard relays, where the two safety AND gate circuits respectively connect to the two onboard relays, and the two onboard relays connect to an emergency braking unit of the train.

Further,
the interface module connects to a speed sensor unit of the train through a first interface, the interface module is configured to collect statistics about a quantity of output pulse waveforms of the speed sensor unit, calculate a cycle of a pulse, and report the quantity of the output pulse waveforms and the cycle of the pulse to the communication module.

Further,
the interface module connects to a switch button of a train cab through a second interface.

Further,
the interface module is provided with a dynamic pulse acquiring circuit, where the dynamic pulse acquiring circuit is configured to perform AND gate logic operation on a control pulse sent by the communication module and a level signal acquired from the second interface.

Further,
the interface module is provided with a second dynamic acquiring circuit, where the second dynamic acquiring circuit is configured to reaquire a level signal in a dry contact for requisition of the onboard relay so as to acquire emergency brake output status information of the onboard relay for the communication module.

Further,
the recording module is configured to connect the communication module, logic decoding module, interface module, and power amplification module through diode isolation.

Further, the system further includes an onboard man-machine interface.

The communication module connects to the onboard man-machine interface.

The present invention further provides a train control method that is applied to the point-type onboard system for controlling a train and includes at least one of the following steps:
A, controlling the logic decoding module to determine a frequency of a ground antenna through which the train passes;
B, controlling the interface module to avoid continuous misunderstanding that an acquired signal has a single level characteristic due to a dynamic pulse acquiring circuit failure;
C, controlling the communication module to perform emergency braking; and
D, controlling the communication module to monitor speed.

Further,
in step A, the logic decoding module is controlled to receive an LC current of the power amplification module, and
when the onboard antenna resonates with the ground antenna, the logic decoding module is controlled to parse the received LC current, and the frequency of the ground antenna through which the train passes is determined if the LC current has dropped and the logic decoding module has identified a frequency corresponding to the dropped LC current.

Further,
in step A, the two CPUs having independent power supplies of the logic decoding module are controlled to transmit, through an isolated serial communication channel, a decoding result of the logic decoding module and compare and check the result.

Further,
in step B,
the interface module is controlled to collect statistics about a quantity of output pulse waveforms of the speed sensor, calculate a cycle of an output pulse, and report the two pieces of information to the communication module; and
a dynamic pulse acquiring circuit of the interface module is controlled to perform AND gate logic operation on a control pulse sent by the communication module and a level signal acquired from the second interface of the interface module, a result of the AND gate logic operation is acquired by the communication module, and the acquired result is used to identify and avoid continuous misunderstanding that a level signal acquired by the dynamic pulse acquiring circuit has a single level characteristic due to a dynamic pulse acquiring circuit failure.

Further,
the interface module is controlled to reacquire a level signal in a dry contact for reacquisition of the onboard relay on the interface module by using the second dynamic acquiring circuit, and acquire emergency brake output status information of an onboard relay for the communication module, and
according to an emergency braking command outputted by the communication module and the reacquired emergency brake output status information, the communication module determines whether an onboard relay sticking fault occurs, wherein the sticking fault occurs when the emergency braking command and the reacquired emergency brake output status information are inconsistent.

Further,
in step C, the two CPUs having independent power supplies of the communication module each output a pulse square wave to the safety AND gate circuit of the interface module, and when any of the two CPUs having independent power supplies of the communication module does not output the pulse square wave, the safety AND gate circuit of the interface module controls the relay to fall, that is, outputs emergency braking.

Further,
in step D, CPUs of the communication module, logic decoding module, and interface module are controlled to communicate with each other, an onboard antenna resonance state, speed information, and displacement information are obtained from the logic decoding module, and related information of a level signal outputted by the safety AND gate circuit is acquired.

The point-type onboard system for controlling a train in the present invention has the functional characteristics of fault self-diagnosis. It can be determined according to the voltage value whether the power amplification module of the host or the onboard antenna fails or is disconnected. The diagnostic circuit has double CPUs each having an independent power supply to avoid misjudgment caused by a single fault. The system has high security and uses a safety AND gate circuit structure for the output emergency brake, so as to avoid the failure to output the emergency braking due to the failure of the single-channel CPU circuit. Further, the system uses three independent frequency signals to provide signals for the PZB onboard antenna, avoiding the potential safety hazard of fault interference between signals, where the host is small, which is convenient for integrated mounting of new vehicles.

Other features and advantages of the present invention are described in the specification, and some of them are apparent from the description, or may be learned by practice of the present invention. The objectives and other advantages of the present invention may be implemented and obtained by using the structure described in the specification, claims, and drawings.

### BRIEF DESCRIPTION OF THE DRAWINGS

To describe the technical solutions in the embodiments of the present invention and in the related art more clearly, the following briefly describes the accompanying drawings required for describing the embodiments and the related art. Apparently, the accompanying drawings in the following descriptions show some of the embodiments of the present invention, and a person of ordinary skill in the art may still derive other drawings from these accompanying drawings without creative efforts.

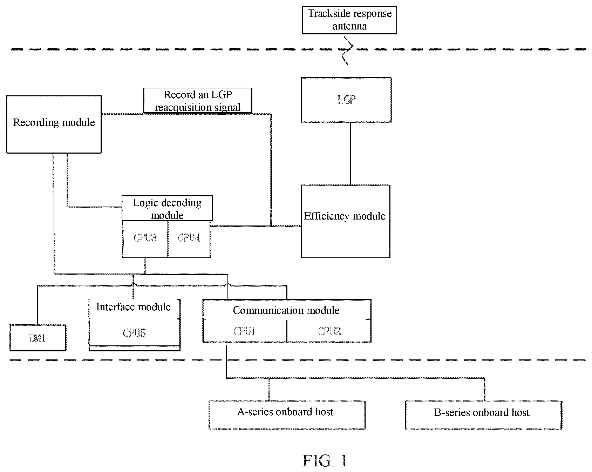

FIG. 1 is a schematic structural diagram of a point-type onboard system for controlling a train according to an embodiment of the present invention.

### DETAILED DESCRIPTION

In order to make the objectives, technical solutions and advantages of the embodiments of the present invention clearer, the technical solutions in the embodiments of the present invention are clearly and completely described below in conjunction with the drawings in the embodiments of the present invention. Apparently, the described embodiments are some rather than all of the embodiments of the present invention. All other embodiments obtained by a person of ordinary skill in the art on the basis of the embodiments of the present invention without creative efforts shall fall within the protection scope of the present invention.

FIG. 1 is a schematic structural diagram of a point-type onboard system for controlling a train according to the present invention. The point-type onboard system for controlling a train of the present invention includes a PZB onboard antenna (which can also be referred to as LGP) and a PZB onboard host (which can also be referred to as an onboard host). The onboard host includes a recording module, a logic decoding module, a power amplification module, an interface module, and a communication module. The logic decoding module is provided with two CPUs having independent power supplies: CPU 3 and CPU 4. The communication module is provided with two CPUs having independent power supplies: CPU 1 and CPU 2. The interface module is provided with one CPU: CPU 5. The point-type onboard system for controlling a train may further include an onboard man-machine interface (DMI). In this case, DMI connects to the communication module.

It can be seen from FIG. 1 that the communication module connects to the logic decoding module, the recording module, and the recording module, and the interface module connects the logic decoding module to the recording module. The recording module connects to the power amplification module and the logic decoding module. The power amplification module connects to the LGP. The communication module can be connected to an A-series onboard host and a B-series onboard host. The A-series onboard host and the B-series onboard host are mutually redundant.

The LGP is mounted on the right side of the driving direction of a train. When the train passes the PZB trackside response antenna (which can be also referred to as ground antenna) mounted on the side of the rail, the onboard antenna and the ground antenna form resonance, and the impedance of the onboard antenna increases.

When the point-type onboard system for controlling a train of the present invention works, the power amplification module is used to continuously send three independent sine wave signals for the onboard antenna, the frequencies being 500 Hz, 1000 Hz, 2000 Hz respectively. When the onboard antenna does not resonate with the ground antenna, the voltage signal outputted by the power amplification module generates currents of, for example, 270 mA in the three signal loops corresponding to the three frequencies of the onboard antenna. When the onboard antenna and the ground antenna resonate at any one of the three frequencies, the current, in the signal loop outputted by the power amplification module, corresponding to the signal loop of a resonant frequency drops sharply to less than half of the original current value. The output current value of the power amplification module (hereinafter referred to as LC current) is converted into voltage information (hereinafter referred to as LC voltage) using a sensor on the power amplification module such as a non-contact current sensor.

The logic decoding module is configured to provide an enable signal for the power amplification module, the enable signal is active at high level, and the power amplification module outputs LC current only when the enable signal is at high level. The power amplification module is provided with a voltage detection terminal. The logic decoding module is configured to receive the LC current of the power amplification module, and is also configured to receive the output voltage detection signal of the power amplification module detected from the voltage detection terminal of the power amplification module. When the onboard antenna resonates with the ground antenna, the logic decoding module is configured to parse the received LC current, and the frequency of the ground antenna through which the train passes is determined if the LC current has dropped and the logic decoding module has identified a frequency corresponding to the dropped LC current. The frequency information of the ground antenna represents the position information of the signal light, and nearly half of them can obtain the corresponding displacement information and speed information. The logic decoding module is configured to send the received determining signal to the communication module. The logic decoding module has two independent CPUs: CPU3 and CPU4, the power supplies of CPU3 and CPU4 being completely independent. CPU3 and CPU4 are configured to transmit, through an isolated serial communication channel, a decoding result of the logic decoding module and compare and check the result.

Each of the three LC currents outputted by the power amplification module is acquired by two independent current sensors such as non-contact current sensors. The detection signal outputted by the current sensor is acquired by the respective analog-signal-to-digital-signal (AD) channels of CPU3 and CPU4 of the logic decoding module.

The interface module is provided with two safety AND gate circuits. Under the control of the logic decoding module, the level signals outputted by the two safety AND gate circuits are respectively configured to control the two relays (hereinafter referred to as onboard relays, each onboard relay having one dry contact connected to the emergency braking unit of the train and another dry contact for reacquisition configured to reacquire the level signal outputted by the onboard relay) of the interface module to go up or down. The output dry contacts of the two relays of the interface module are configured to connect the emergency braking unit of the train to control the emergency braking of the train. The interface module has a first interface connected to a speed sensor unit. The interface module collects statistics about a quantity of output pulse waveforms of the speed sensor unit, calculates a cycle of a pulse, and reports the quantity of the output pulse waveforms and the cycle of the pulse to the communication module. The communication module sends control pulses to the interface module. The interface module has a second interface connected to the switch button of the train cab. A dynamic pulse acquiring circuit is also provided on the interface module. The dynamic pulse acquiring circuit performs AND gate logic operation on a control pulse sent by the communication module and a level signal acquired from the second interface of the interface module, a result of the AND gate logic operation is acquired by the communication module, and the acquired result is used to identify and avoid continuous misunderstanding that a level signal acquired by the dynamic pulse acquiring circuit has a single level characteristic due to a dynamic pulse acquiring circuit failure. The interface module reacquires the level signal in the dry contact for reacquisition of the onboard relay on the interface module through the second dynamic acquiring circuit, such that the second dynamic acquiring circuit acquires the emergency brake (EB) output status information for the communication module. According to an EB command outputted by the communication module and the reacquired EB output status information, the communication module determines whether an onboard relay sticking fault occurs, where the sticking fault occurs when the EB command and the reacquired EB output status information are inconsistent.

The communication module has an Ethernet communication interface, and the Ethernet interface is connected to the DMI for controlling the output of the DMI: train speed, speed monitoring result, and alarm information, and the like. The Ethernet interface is further configured to receive human-computer interaction information such as data input or commands from the DMI. The communication module has an interface such as Profibus-DP for communication with a control system such as the European Train Control System (ETCS system). When the point-type onboard system for controlling a train of the present invention is used as the special transmission module (STM) of ETCS equipment, the communication module receives the command of ETCS to control the point-type onboard system for controlling a train. The communication with ETCS complies with the requirements of STM control state transition and working state transition stipulated in SUBSET-026 and SUBSET-035 in functional requirement specifications of the ETCS train control system. When the point-type onboard system for controlling a train in the present invention works in independent vehicle control mode, the Profibus-DP interface of the communication module can be reserved, or used to output communication data to ETCS equipment or judicial recording unit equipment according to the communication protocol. The communication module is provided with two CPUs having independent power supplies: CPU1 and CPU2. CPU1 and CPU2 are configured to output the pulse square wave to the safety AND gate circuit of the interface module respectively. When any of CPU1 and CPU2 does not output independent power supplies outputs the pulse square wave, the safety AND gate circuit of the interface module controls the onboard relay to fall, that is, outputs emergency braking. The communication module is configured to communicate with the CPUs of the logic decoding module and the interface module through the controller area network (CAN) bus, to obtain the onboard antenna resonance state (that is, whether it is in resonance), speed information, and displacement information from the logic decoding module, and acquire relevant information such as the level signal outputted by the safety AND gate circuit. The communication module is configured to comprehensively process the above information so as to perform the PZB speed monitoring function of assisting the driver in driving.

The recording module is configured to connect the communication module, logic decoding module, interface module, and power amplification module through diode isolation using the CAN bus. The recording module is connected to the universal asynchronous receiver transmitter (UART) serial communication interfaces of the communication module and the logic decoding module for outputting. The recording module may be configured to acquire and record the LC voltage signal of the power amplification module and the communication data of each CPU (that is, CPU1-CPU5). Each CPU outputs UART maintenance data.

The power supply module in the host function device is configured to provide separate power supplies to double CPUs of the communication module, the double CPUs of the logic decoding module, the CPU of the interface module, and the power amplification module so as to output signals to the onboard antenna. The input DC of the power module may be 110 V DC or 72 V.

The host function equipment includes a backplane, where the backplane is provided with a plurality of slots, and the slots are used for placing and correspondingly connecting each module in the host function equipment, the connection including direct electrical connections and level connection as well as logic connection to each module.

The point-type onboard system for controlling a train in the present invention has the functional characteristics of fault self-diagnosis. It can be determined according to the voltage value whether the power amplification module of the host or the onboard antenna fails or is disconnected. The diagnostic circuit has double CPUs each having an independent power supply to avoid misjudgment caused by a single fault. The system has high security and uses a safety AND gate circuit structure for the output emergency brake, so as to avoid the failure to output the emergency braking due to the failure of the single-channel CPU circuit. Further, the system uses three independent frequency signals to provide signals for the PZB onboard antenna, avoiding the potential safety hazard of fault interference between signals, where the host is small in size, which is convenient for integrated mounting of new vehicles.

Although the present invention is described in detail with respect to the previously described embodiments, it should be appreciated by one skilled in art, the technical solutions recorded in the embodiments may be still modified, or some of its technical features may be replaced with equivalents; and such modifications or substitutions do not deviate the nature of the technical solutions from the scope of the technical solutions of the various embodiments in the present invention.

## Claims

1. A point-type onboard system for controlling a train, comprising an onboard antenna, a recording module, a logic decoding module, a power amplification module, an interface module, and a communication module
wherein
the communication module connects to the logic decoding module, the recording module, and the interface module;
the interface module connects to the logic decoding module and the recording module;
the recording module connects to the power amplification module and the logic decoding module; and
the power amplification module connects to the onboard antenna;
**characterized in that** the logic decoding module is provided with two CPUs having independent power supplies;
the communication module is provided with two CPUs having independent power supplies;
the interface module is provided with a CPU; and
wherein the interface module is provided with two safety AND gate circuits and two onboard relays, wherein the two safety AND gate circuits respectively connect to the two onboard relays, and the two onboard relays connect to an emergency braking unit of the train,
wherein the two CPUs of the communication module are configured such that each outputs a pulse square wave to the safety AND gate circuits and when any of said two CPUs does not output the pulse square wave, the safety AND gate circuits control, under the control of the logical decoding module, the onboard relays to output emergency braking.

2. The point-type onboard system for controlling a train according to claim 1, **characterized in that** the interface module connects to a speed sensor unit of the train through a first interface, the interface module is configured to collect statistics about a quantity of output pulse waveforms of the speed sensor unit, calculate a cycle of a pulse, and report the quantity of the output pulse waveforms and the cycle of the pulse to the communication module;
wherein the interface module connects to a switch button of a train cab through a second interface.

3. The point-type onboard system for controlling a train according to claim 2, **characterized in that** the interface module is provided with a dynamic pulse acquiring circuit, wherein the dynamic pulse acquiring circuit is configured to perform AND gate logic operation on a control pulse sent by the communication module and a level signal acquired from the second interface.

4. The point-type onboard system for controlling a train according to claim 2, **characterized in that** the interface module is provided with a second dynamic acquiring circuit, wherein the second dynamic acquiring circuit is configured to reaquire a level signal in a dry contact for requisition of the onboard relay so as to acquire emergency brake output status information of the onboard relay for the communication module.

5. The point-type onboard system for controlling a train according to any one of claims 1 to 6, **characterized in that**
the recording module is configured to connect the communication module, logic decoding module, interface module, and power amplification module through diode isolation.

6. The point-type onboard system for controlling a train according to any one of claims 1 to 6, further comprising an onboard man-machine interface, wherein the communication module connects to the onboard man-machine interface.

7. A train control method, applied to the point-type onboard system for controlling a train according to any one of claims 1 to 6, comprising at least one of the following steps:
A, controlling the logic decoding module to determine a frequency of a ground antenna through which the train passes;
B, controlling the interface module to avoid continuous misunderstanding that an acquired signal has a single level characteristic due to a dynamic pulse acquiring circuit failure;
C, controlling the communication module to perform emergency braking; and
D, controlling the communication module to monitor speed.
wherein in step C, the two CPUs of the communication module each output a pulse square wave to the safety AND gate circuits and when any of said two CPUs does not output the pulse square wave, the safety AND gate circuits control, under the control of the logical decoding module, the onboard relays to output emergency braking.

8. The train control method according to claim 7, **characterized in that**
in step A, the logic decoding module is controlled to receive an LC current of the power amplification module, and
when the onboard antenna resonates with the ground antenna, the logic decoding module is controlled to parse the received LC current, and the frequency of the ground antenna through which the train passes is determined if the LC current has dropped and the logic decoding module has identified a frequency corresponding to the dropped LC current.

9. The train control method according to claim 8, **characterized in that**
in step A, the two CPUs having independent power supplies of the logic decoding module are controlled to transmit, through an isolated serial communication channel, a decoding result of the logic decoding module and compare and check the result.

10. The train control method according to claim 7 applied to the point-type onboard system according to claim 2 or claim 3, **characterized in that**
in step B, the interface module is controlled to collect statistics about a quantity of output pulse waveforms of the speed sensor, calculate a cycle of an output pulse, and report the two pieces of information to the communication module; and
a dynamic pulse acquiring circuit of the interface module is controlled to perform AND gate logic operation on a control pulse sent by the communication module and a level signal acquired from the second interface of the interface module, a result of the AND gate logic operation is acquired by the communication module, and the acquired result is used to identify and avoid continuous misunderstanding that a level signal acquired by the dynamic pulse acquiring circuit has a single level characteristic due to a dynamic pulse acquiring circuit failure.

11. The train control method according to claim 7, **characterized in that**
in step D, CPUs of the communication module, logic decoding module, and interface module are controlled to communicate with each other, an onboard antenna resonance state, speed information, and displacement information are obtained from the logic decoding module, and related information of a level signal outputted by the safety AND gate circuit is acquired.

## Patentansprüche

1. Punktartiges, bordeigenes System zum Steuern eines Zuges, umfassend eine bordeigene Antenne, ein Aufzeichnungsmodul, ein logisches Decodierungsmodul, ein Leistungsverstärkungsmodul, ein Schnittstellenmodul und ein Kommunikationsmodul,
wobei
das Kommunikationsmodul eine Verbindung mit dem logischen Decodierungsmodul, dem Aufzeichnungsmodul und dem Schnittstellenmodul herstellt;
das Schnittstellenmodul eine Verbindung mit dem logischen Decodierungsmodul und dem Aufzeichnungsmodul herstellt;
das Aufzeichnungsmodul eine Verbindung mit dem Leistungsverstärkungsmodul und dem logischen Decodierungsmodul herstellt; und
das Leistungsverstärkungsmodul eine Verbindung mit der bordeigenen Antenne herstellt; **dadurch gekennzeichnet, dass** das logische Decodierungsmodul mit zwei CPUs bereitgestellt ist, die unabhängige Stromversorgungen aufweisen;
das Kommunikationsmodul mit zwei CPUs bereitgestellt ist, die unabhängige Stromversorgungen aufweisen;
das Schnittstellenmodul mit einer CPU bereitgestellt ist; und
wobei das Schnittstellenmodul mit zwei Sicherheits-UND-Gatter-Schaltungen und zwei bordeigenen Relais bereitgestellt ist, wobei die zwei Sicherheits-UND-Gatter-Schaltungen jeweils eine Verbindung mit den zwei bordeigenen Relais herstellen und die zwei bordeigenen Relais eine Verbindung mit einer Notbremseinheit des Zuges herstellen,
wobei die zwei CPUs des Kommunikationsmoduls derart konfiguriert sind, dass jede eine Impuls-Rechteckschwingung an die Sicherheits-UND-Gatter-Schaltungen ausgibt und, wenn eine der zwei CPUs die Impuls-Rechteckschwingung nicht ausgibt, die Sicherheits-UND-Gatter-Schaltungen unter der Steuerung des logischen Decodierungsmoduls die bordeigenen Relais steuern, um eine Notbremsung auszugeben.

2. Punktartiges, bordeigenes System zum Steuern eines Zuges nach Anspruch 1, **dadurch gekennzeichnet, dass** das Schnittstellenmodul eine Verbindung mit einer Geschwindigkeitssensoreinheit des Zuges über eine erste Schnittstelle herstellt, das Schnittstellenmodul dazu konfiguriert ist, Statistiken über eine Menge von ausgegebenen Impulswellenformen der Geschwindigkeitssensoreinheit zu sammeln, einen Zyklus eines Pulses zu berechnen und die Menge der ausgegebenen Impulswellenformen und den Zyklus des Pulses an das Kommunikationsmodul zu melden;
wobei das Schnittstellenmodul eine Verbindung mit einem Umschaltknopf einer Zugkabine über eine zweite Schnittstelle herstellt.

3. Punktartiges, bordeigenes System zum Steuern eines Zuges nach Anspruch 2, **dadurch gekennzeichnet, dass** das Schnittstellenmodul mit einer dynamischen Impulserfassungsschaltung bereitgestellt ist, wobei die dynamische Impulserfassungsschaltung dazu konfiguriert ist, einen logischen UND-Gatter-Vorgang an einem Steuerimpuls, der durch das Kommunikationsmodul gesendet wird, und einem Pegelsignal, das von der zweiten Schnittstelle erfasst wird, durchzuführen.

4. Punktartiges, bordeigenes System zum Steuern eines Zuges nach Anspruch 2, **dadurch gekennzeichnet, dass** das Schnittstellenmodul mit einer zweiten dynamischen Erfassungsschaltung bereitgestellt ist, wobei die zweite dynamische Erfassungsschaltung dazu konfiguriert ist, ein Pegelsignal in einem potentialfreien Kontakt für eine Anforderung des bordeigenen Relais erneut zu erfassen, um Statusinformationen zur Notbremsausgabe des bordeigenen Relais für das Kommunikationsmodul zu erfassen.

5. Punktartiges, bordeigenes System zum Steuern eines Zuges nach einem der Ansprüche 1 bis 6, **dadurch gekennzeichnet, dass**
das Aufzeichnungsmodul dazu konfiguriert ist, das Kommunikationsmodul, das logische Decodierungsmodul, das Schnittstellenmodul und das Leistungsverstärkungsmodul durch Diodenentkopplung zu verbinden.

6. Punktartiges, bordeigenes System zum Steuern eines Zuges nach einem der Ansprüche 1 bis 6, ferner umfassend eine bordeigene Mensch-Maschine-Schnittstelle, wobei das Kommunikationsmodul eine Verbindung mit der bordeigenen Mensch-Maschine-Schnittstelle herstellt.

7. Zugsteuerungsverfahren, das auf das punktartige, bordeigene System zum Steuern eines Zuges nach einem der Ansprüche 1 bis 6 angewendet wird, umfassend mindestens einen der folgenden Schritte:
A, Steuern des logischen Decodierungsmoduls zum Bestimmen einer Frequenz einer Bodenantenne, die der Zug passiert;
B, Steuern des Schnittstellenmoduls, um ein kontinuierliches Missverständnis darüber zu vermeiden, dass ein erfasstes Signal aufgrund eines Ausfalls einer dynamischen Impulserfassungsschaltung eine Einzelpegel-Charakteristik aufweist;
C, Steuern des Kommunikationsmoduls, um eine Notbremsung durchzuführen; und
D, Steuern des Kommunikationsmoduls, um die Geschwindigkeit zu überwachen.
wobei in Schritt C die zwei CPUs des Kommunikationsmoduls jeweils eine Impuls-Rechteckschwingung an die Sicherheits-UND-Gatterschaltungen ausgeben und, wenn eine der zwei CPUs die Impuls-Rechteckschwingung nicht ausgibt, die Sicherheits-UND-Gatterschaltungen unter der Steuerung des logischen Decodierungsmoduls die bordeigenen Relais steuern, um eine Notbremsung auszugeben.

8. Zugsteuerungsverfahren nach Anspruch 7, **dadurch gekennzeichnet, dass**
in Schritt A das logische Decodierungsmodul gesteuert wird, um einen LC-Strom des Leistungsverstärkungsmoduls zu empfangen, und,
wenn die bordeigene Antenne mit der Bodenantenne mitschwingt, das logische Decodierungsmodul
gesteuert wird, um den empfangenen LC-Strom zu parsen, und die Frequenz der Bodenantenne, die der Zug passiert, bestimmt wird, falls der LC-Strom gefallen ist und das logische Decodierungsmodul eine Frequenz, die dem gefallenen LC-Strom entspricht, identifiziert hat.

9. Zugsteuerungsverfahren nach Anspruch 8, **dadurch gekennzeichnet, dass**
in Schritt A die zwei CPUs, die unabhängige Stromversorgungen des logischen Decodierungsmoduls aufweisen, gesteuert werden, um über einen entkoppelten seriellen Kommunikationskanal ein Decodierungsergebnis des logischen Decodierungsmoduls zu übertragen und das Ergebnis zu vergleichen und zu prüfen.

10. Zugsteuerungsverfahren nach Anspruch 7, angewendet auf das punktförmige, bordeigene System nach Anspruch 2 oder Anspruch 3, **dadurch gekennzeichnet, dass**
in Schritt B das Schnittstellenmodul gesteuert wird, um Statistiken über eine Menge von ausgegebenen Impulswellenformen des Geschwindigkeitssensors zu sammeln, einen Zyklus eines ausgegebenen Impulses zu berechnen und die zwei Informationen an das Kommunikationsmodul zu melden; und
eine dynamische Impulserfassungsschaltung des Schnittstellenmoduls gesteuert wird, um einen logischen UND-Gatter-Vorgang an einem durch das Kommunikationsmodul gesendeten Steuerimpuls und einem von der zweiten Schnittstelle des Schnittstellenmoduls erfassten Pegelsignal durchzuführen, ein Ergebnis des logischen UND-Gatter-Vorgangs durch das Kommunikationsmodul erfasst wird und das erfasste Ergebnis verwendet wird, um ein kontinuierliches Missverständnis darüber zu identifizieren und zu vermeiden, dass ein durch die dynamische Impulserfassungsschaltung erfasstes Pegelsignal aufgrund eines Ausfalls einer dynamischen Impulserfassungsschaltung eine Einzelpegel-Charakteristik aufweist.

11. Zugsteuerungsverfahren nach Anspruch 7, **dadurch gekennzeichnet, dass**
in Schritt D CPUs des Kommunikationsmoduls, des logischen Decodierungsmoduls und des Schnittstellenmoduls gesteuert werden, um miteinander zu kommunizieren, ein Resonanzzustand der bordeigenen Antenne, Geschwindigkeitsinformationen und Bewegungsinformationen von dem logischen Decodierungsmodul erlangt werden und zugehörige Informationen eines Pegelsignals, das durch die Sicherheits-UND-Gatterschaltung ausgegeben wird, erfasst werden.

## Revendications

1. Système embarqué de type ponctuel pour commander un train, comprenant une antenne embarquée, un module d'enregistrement, un module de décodage logique, un module d'amplification de puissance, un module d'interface et un module de communication
dans lequel
le module de communication se connecte au module de décodage logique, au module d'enregistrement et au module d'interface ;
le module d'interface se connecte au module de décodage logique et au module d'enregistrement ;
le module d'enregistrement se connecte au module d'amplification de puissance et au module de décodage logique ; et
le module d'amplification de puissance se connecte à l'antenne embarquée ;
**caractérisé en ce que** le module de décodage logique est pourvu de deux CPU (unité centrale) ayant des alimentations électriques indépendantes ;
le module de communication est pourvu de deux CPU ayant des alimentations électriques indépendantes ;
le module d'interface est pourvu d'une CPU ; et
dans lequel le module d'interface est pourvu de deux circuits de porte ET de sécurité et de deux relais embarqués, dans lequel les deux circuits de porte ET de sécurité se connectent respectivement aux deux relais embarqués, et les deux relais embarqués se connectent à une unité de freinage d'urgence du train,
dans lequel les deux CPU du module de communication sont configurées de telle sorte que chacune émet une onde carrée d'impulsion vers les circuits de porte ET de sécurité et lorsque l'une quelconque desdites deux CPU n'émet pas l'onde carrée d'impulsion, les circuits de porte ET de sécurité commandent, sous la commande du module de décodage logique, les relais embarqués pour émettre un freinage d'urgence.

2. Système embarqué de type ponctuel pour commander un train selon la revendication 1, **caractérisé en ce que** le module d'interface se connecte à une unité de capteur de vitesse du train via une première interface, le module d'interface est configuré pour collecter des statistiques concernant une quantité de formes d'onde d'impulsion émises de l'unité de capteur de vitesse, calculer un cycle d'une impulsion et rapporter la quantité des formes d'onde d'impulsion émises et le cycle de l'impulsion au module de communication ;
dans lequel le module d'interface se connecte à un bouton de commutation d'une cabine de train via une deuxième interface.

3. Système embarqué de type ponctuel pour commander un train selon la revendication 2, **caractérisé en ce que** le module d'interface est pourvu d'un circuit d'acquisition d'impulsions dynamiques, dans lequel le circuit d'acquisition d'impulsions dynamiques est configuré pour effectuer une opération logique de porte ET sur une impulsion de commande envoyée par le module de communication et un signal de niveau acquis à partir de la deuxième interface.

4. Système embarqué de type ponctuel pour commander un train selon la revendication 2, **caractérisé en ce que** le module d'interface est pourvu d'un deuxième circuit d'acquisition dynamique, dans lequel le deuxième circuit d'acquisition dynamique est configuré pour réacquérir un signal de niveau dans un contact sec pour la réquisition du relais embarqué de façon à acquérir des informations de statut de sortie de frein d'urgence du relais embarqué pour le module de communication.

5. Système embarqué de type ponctuel pour commander un train selon l'une quelconque des revendications 1 à 6, **caractérisé en ce que**
le module d'enregistrement est configuré pour se connecter au module de communication, au module de décodage logique, au module d'interface et au module d'amplification de puissance via une isolation de diode.

6. Système embarqué de type ponctuel pour commander un train selon l'une quelconque des revendications 1 à 6, comprenant en outre une interface homme-machine embarquée, dans lequel le module de communication se connecte à l'interface homme-machine embarquée.

7. Procédé de commande de train, appliqué au système embarqué de type ponctuel pour commander un train selon l'une quelconque des revendications 1 à 6, comprenant au moins l'une des étapes suivantes :
A, la commande du module de décodage logique pour déterminer une fréquence d'une antenne au sol par laquelle le train passe ;
B, la commande du module d'interface pour éviter une incompréhension continue selon laquelle un signal acquis a une caractéristique de niveau unique en raison d'une défaillance de circuit d'acquisition d'impulsions dynamiques ;
C, la commande du module de communication pour effectuer un freinage d'urgence ; et
D, la commande du module de communication pour surveiller la vitesse,
dans lequel, à l'étape C, les deux CPU du module de communication émettent chacune une onde carrée d'impulsion vers les circuits de porte ET de sécurité et, lorsque l'une quelconque desdites deux CPU n'émet pas l'onde carrée d'impulsion, les circuits de porte ET de sécurité commandent, sous la commande du module de décodage logique, les relais embarqués pour émettre un freinage d'urgence.

8. Procédé de commande de train selon la revendication 7, **caractérisé en ce que**
à l'étape A, le module de décodage logique est commandé pour recevoir un courant LC du module d'amplification de puissance, et
lorsque l'antenne embarquée résonne avec l'antenne au sol, le module de décodage logique est commandé pour analyser le courant LC reçu, et la fréquence de l'antenne au sol par laquelle le train passe est déterminée si le courant LC a chuté et si le module de décodage logique a identifié une fréquence correspondant au courant LC chuté.

9. Procédé de commande de train selon la revendication 8, **caractérisé en ce que**
à l'étape A, les deux CPU ayant des alimentations électriques indépendantes du module de décodage logique sont commandées pour transmettre, par l'intermédiaire d'un canal de communication série isolé, un résultat de décodage du module de décodage logique et comparer et vérifier le résultat.

10. Procédé de commande de train selon la revendication 7 appliqué au système embarqué de type ponctuel selon la revendication 2 ou la revendication 3, **caractérisé en ce que**
à l'étape B, le module d'interface est commandé pour collecter des statistiques concernant une quantité de formes d'onde d'impulsion émises du capteur de vitesse, calculer un cycle d'une impulsion émise et rapporter les deux informations au module de communication ; et
un circuit d'acquisition d'impulsions dynamiques du module d'interface est commandé pour effectuer une opération logique de porte ET sur une impulsion de commande envoyée par le module de communication et un signal de niveau acquis à partir de la deuxième interface du module d'interface, un résultat de l'opération logique de porte ET est acquis par le module de communication, et le résultat acquis est utilisé pour identifier et éviter une incompréhension continue selon laquelle un signal de niveau acquis par le circuit d'acquisition d'impulsions dynamiques a une caractéristique de niveau unique en raison d'une défaillance de circuit d'acquisition d'impulsions dynamiques.

11. Procédé de commande de train selon la revendication 7, **caractérisé en ce que**
à l'étape D, les CPU du module de communication, du module de décodage logique et du module d'interface sont commandées pour communiquer entre elles, un état de résonance d'antenne embarquée, des informations de vitesse et des informations de déplacement sont obtenus à partir du module de décodage logique, et des informations connexes d'un signal de niveau émis par le circuit de porte logique ET de sécurité sont acquises.
